# EUROPÄISCHE PATENTANMELDUNG

(11) **EP 1 783 309 A2**
(43) Veröffentlichungstag der Anmeldung: **09.05.2007**
(21) Anmeldenummer: 06021242.0
(22) Anmeldetag: 10.10.2006
(51) Int. Cl.: E05F 1/00, F02B 1/00, F02D 1/00, F16D 1/00, H02H 1/00

(54) **Verfahren zur Anschlagdämpfung einer Stellvorrichtung sowie Stellvorrichtung für eine Verbrennungskraftmaschine**

(30) Priorität: 07.11.2005 DE 102005052965
(71) Anmelder: Pierburg GmbH, 41460 Neuss (DE)
(72) Erfinder: Ludwig, Norbert, 41379 Brüggen (DE); Bürger, Frank, 52335 Düren (DE)
(74) Vertreter: Rütten, Peter Laurenz

(57) **Zusammenfassung**

Es wird ein Verfahren zur Anschlagdämpfung einer Stellvorrichtung sowie eine entsprechende Stellvorrichtung vorgeschlagen, welche über einen Gleichstrommotor (3) angetrieben wird und federbelastet in zumindest einen Endanschlag fahrbar ist. Erfindungsgemäß wird vorgeschlagen, dass die Ansteuereinheit eine parallel zum Gleichstrommotor (3) angeordnete Zenerdiode (4) aufweist, über die ein Stromkreis nach Trennen des Gleichstrommotors (3) von einer Spannungsquelle (1, 2) sowie einer daraus folgenden Überschreitung der Sperrspannung U_{Sp} der Zenerdiode (4) durch die induzierte Spannung U_{ind} des Gleichstrommotors (3) geschlossen wird. Je nach Auslegung der Zenerdiode (4) kann somit eine je nach Anwendung optimierte Anschlagdämpfung bei gleichzeitiger Verkürzung der Verstellzeit erreicht werden.

## Beschreibung

Die Erfindung betrifft ein Verfahren zur Anschlagdämpfung einer Stellvorrichtung mit einem Gleichstrommotor, der einen Rotor und einen Stator aufweist und über den eine anzutreibende Komponente federbelastet in zumindest eine Endlage bewegt wird sowie eine Stellvorrichtung für eine Verbrennungskraftmaschine mit einem Gleichstrommotor, einer Antriebswelle, welche vom Gleichstrommotor antreibbar ist, einer Getriebeeinheit, welche mit der Antriebswelle und einer Abtriebswelle zur untersetzten Übertragung der Bewegung der Antriebswelle auf die Abtriebswelle gekoppelt ist, zu verstellenden Komponenten, welche die Abtriebswelle in Bewegung versetzt, und einem Federelement, welches ein schwenkbares Teil der Stellvorrichtung oder der zu verstellenden Komponenten in Richtung zumindest einer durch einen mechanischen Anschlag definierten Endlage belastet.

Derartig aufgebaute Stellvorrichtungen sind allgemein bekannt und werden in einer Vielzahl von Anmeldungen beschrieben. Das Federelement dient dabei zumeist als Rückstellfeder zum Verstellen der Komponenten in eine Notlaufposition.

Aus der DE 43 09 904 A1 ist jedoch eine Stellvorrichtung bekannt, welche ein bistabiles Federelement aufweist, so dass beide Endlagen belastet angefahren werden können. Dies bedeutet, dass nach Überschreiten eines Kipppunktes der Gleichstrommotor und somit die zu verstellenden Komponenten durch die Federkraft beim Verstellen in beide Endstellungen belastet werden, so dass der Motor nach Erreichen der Endstellungen trotz auftretender äußerer Kräfte ausgestellt werden kann. Dadurch wird eine deutliche Reduzierung des Stromverbrauchs erzielt.

Des Weiteren sind verschiedene Verfahren zur Bremsung von Elektromotoren beziehungsweise zur elektrischen Anschlagdämpfung bekannt.

So ist aus der DE 100 65 355 C2 eine elektromechanische Drehmomentregelung mit Eliminierung des Anschlaggeräusches bekannt. Offenbart wird eine Axialstellvorrichtung, welche federbelastet gegen einen ersten Endanschlag gefahren wird. Zum Bremsen des Motors wird beim Rückstellen kurz vor Erreichen der Endlage der Elektromotor zur Erzeugung eines Bremsmomentes kurzgeschlossen. Des Weiteren ist es bekannt, zur Erzeugung eines Drehmomentes in umgekehrter Richtung die Spannung kurz vor Erreichen des Anschlagpunktes umzupolen.

Die DE 100 65 356 C1 beschreibt unter anderem die Verstellzeit bei der Rückstellung einer federbelasteten Axialstellvorrichtung durch vorzeitiges stromlos setzen des Elektromotors bei Erreichen der Leerlaufdrehzahl zu verkürzen.

Nachteilhaft an einer Abbremsung durch Kurzschluss ist jedoch, dass der Zeitpunkt zur zuverlässigen Anschlagdämpfung schwierig zu bestimmen ist, da dieser abhängig sein kann von den äußeren Bedingungen, wie zum Beispiel von auf die zu verstellenden Komponenten wirkenden Kräften, so dass je nach äußeren Einflüssen weiterhin ein zu harter Anschlag oder aber eine zu harte Abbremsung die Folge sein können. Entsprechend muss der Zeitpunkt sowohl für jede neue Anwendung festgelegt werden als auch gegebenenfalls äußere Einflüsse überwacht werden.

Aufgabe der Erfindung ist es daher, eine von der Umgebung möglichst unabhängige Bremsung in die Endanschläge zu erreichen, welche je nach Anwendung ohne zusätzlichen Steuerungsaufwand anpassbar ist.

Diese Aufgabe wird durch ein Verfahren zur Anschlagdämpfung gelöst, bei dem der Gleichstrommotor vor Erreichen der Endlage von der Spannungsquelle getrennt wird, so dass durch die Bewegung des Rotors aufgrund der Federbelastung eine Spannung U_{ind} in der Wicklung des Stators induziert wird bis eine Sperrspannung U_{Sp} einer parallel zum Gleichstrommotor geschalteten Zenerdiode durch die induzierte Spannung U_{ind} überschritten wird, so dass der Gleichstrommotor über die Zenerdiode kurz geschlossen wird, bis die induzierte Sperrspannung U_{Sp} der Zenerdiode durch die sich abbauende induzierte Spannung U_{ind} unterschritten wird.

Des Weiteren wird diese Aufgabe durch eine Stellvorrichtung gelöst, die eine Ansteuereinheit aufweist, in welcher parallel zum Gleichstrommotor eine Zenerdiode angeordnet ist. Durch dieses Verfahren und die zugehörige Stellvorrichtung wird erreicht, dass je nach Wahl der Sperrspannung U_{Sp} der Zenerdiode eine Kurzschlussschaltung und somit ein Abbremsen des Gleichstrommotors in auswählbarer Weise, nämlich abhängig von der Sperrspannung der Zenerdiode, erfolgt. Dies bedeutet, dass je kleiner die Sperrspannung der Zenerdiode gewählt wird, desto größer ist die Abbremsung des Motors. Auf der anderen Seite erfolgt bei der Wahl einer sehr geringen Sperrspannung der Zenerdiode auch ein relativ langsames Verstellen durch die Stellvorrichtung, da eine über den gesamten Verlauf stärkere Abbremsung erfolgt. Vorteilhaft an einer Ausführung mit einer derartigen Zenerdiode ist es, das im Vergleich zum einfachen Kurzschluss die Anschlaggeschwindigkeit durch die Zenerdiode eingestellt werden kann. Mit einer derartigen Vorrichtung und einem derartigen Verfahren erfolgt nun jeweils eine zunächst beschleunigte Bewegung durch die Federkraft bis die induzierte Spannung U_{ind} die Sperrspannung U_{Sp} übersteigt, wodurch der Motor über den dann erfolgenden Kurzschluss bremst. Sobald sich die induzierte Spannung über die Zenerdiode abgebaut hat, geht diese wieder in den vollständig sperrenden Zustand über, so dass ein Freilauf des Motors mit erneuter Induzierung der Spannung erfolgt. Bei kleinerer Sperrspannung U_{Sp} ist somit die Zeit in der eine Bremsung stattfindet, im Vergleich zu der Zeit in der eine Beschleunigung stattfindet, deutlich größer.

In einer weiterführenden Ausgestaltung des erfindungsgemäßen Verfahrens wird nach Überschreiten der Sperrspannung U_{Sp} der Zenerdiode der Gleichstrommotor bis zum Erreichen des mechanischen Anschlages über eine Kurzschlussschaltung kurz geschlossen. Hierzu weist die Ansteuereinheit der Stellvorrichtung eine Kurzschlussschaltung auf. Somit erfolgt zwar lediglich ein einmaliges Abbremsen, dieses kann jedoch durch geeignete Wahl der Zenerdiode so gewählt werden, dass eine minimale Verstellzeit bei maximaler Anschlagdämpfung erfolgt, wobei die Auslösung der Bremsung von der lediglich von der induzierten Spannung abhängt. So kann bei optimierter Einstellung der Zenerdiode erst kurz vor dem Anschlag die induzierte Spannung so groß werden, dass die Zenerdiode beginnt durchzuschalten, so dass bis dahin eine Beschleunigung des Gleichstrommotors durch die Federkraft erfolgt. Sobald die Sperrspannung U_{Sp} der Zenerdiode überschritten wird, erfolgt eine Bremsung über den Kurzschluss, so dass auf einfache Art und Weise eine Optimierung über den Verstellweg der Stellvorrichtung möglich wird. Gegebenenfalls ist es dann sogar möglich auf einen mit der Ansteuereinheit verbundenen Stellungssensor zur Winkelbestimmung zu verzichten.

Zur Durchführung eines bevorzugten Verfahrens zur Anschlagdämpfung für eine Stellvorrichtung mit zwei federbelasteten anzusteuernden Endlagen wird eine zweite Zenerdiode in Reihe und entgegen zur ersten Zenerdiode parallel zum Gleichstrommotor geschaltet, wobei bei Überschreiten der Sperrspannung U_{Sp} der ersten Zenerdiode plus der Durchgangsspannung U_{D} der zweiten Zenerdiode durch die induzierte Spannung U_{ind} der Gleichstrommotor beim Anfahren beider Endlagen kurz geschlossen wird, bis die Sperrspannung U_{Sp} der ersten Zenerdiode plus der Durchgangsspannung U_{D} der zweiten Zenerdiode wieder unterschritten wird oder die Kurzschlussschaltung betätigt wird. Hierzu weist die Stellvorrichtung zwei definierte Endlagen auf, in welche die Komponenten durch ein bistabiles Federelement belastet fahrbar sind, wobei parallel zum Gleichstrommotor zwei Zenerdioden gegeneinander geschaltet angeordnet sind. Hierdurch wird eine variable elektromechanische Endanschlagdämpfung einer Stellvorrichtung gewährleistet, da nicht nur eine Endlage gezielt und weich angefahren werden kann, sondern zusätzlich auch eine zweite Endlage. Je nach Wahl der Sperrspannung U_{Sp} der Zenerdioden sind in einer solchen Ausführung unterschiedliche Freilauf und Bremspunkte für den Links- beziehungsweise Rechtslauf des Motors umsetzbar. Dies kann beispielsweise bei unsymmetrischen Verstellwegen notwendig sein.

Es wird somit ein Verfahren zur Anschlagdämpfung sowie eine entsprechende Stellvorrichtung offenbart, mit der es möglich ist, einen Gleichstrommotor abhängig von seiner Anwendung gezielt abgebremst gegen einen Endanschlag zu fahren. Je nach Auslegung ist somit die Anschlaggeschwindigkeit sowie die Verstellzeit weitestgehend frei wählbar.

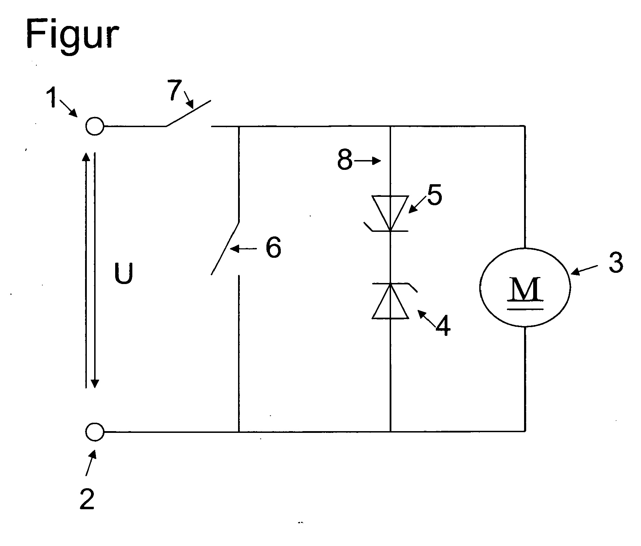

Ein Ausführungsbeispiel ist in der Zeichnung dargestellt und wird nachfolgend beschrieben.

Die Figur zeigt schematisch den erfindungswesentlichen Teil einer Ansteuerschaltung für einen Gleichstrommotor einer erfindungsgemäßen Stellvorrichtung.

Die in der Figur dargestellte Ansteuerschaltung ist für einen reversiblen Gleichstrommotor 3 verwendbar, der als Antriebseinheit einer Stellvorrichtung dient, welche zwei mechanische Anschläge zur Festlegung zweier definierter Endlagen aufweist.

Der Gleichstrommotor besteht aus einem Stator sowie einem Rotor, der eine Wicklung aufweist, die entsprechend der gewünschten Drehrichtung mit der Spannungsquelle verbunden wird. Der Rotor ist fest mit einer Antriebswelle des Gleichstrommotors verbunden, welche über eine Getriebeeinheit die Bewegung des Gleichstrommotors auf eine Abtriebswelle untersetzt, überträgt. Die Abtriebswelle ist entweder fest oder aber andersartig gekoppelt mit zu verstellenden Komponenten, wie beispielsweise Verstellklappen in einem Kraftfahrzeug verbunden. Vorzugsweise ist in der Stellvorrichtung ein Federelement angeordnet, welches bistabil ausgeführt ist, so dass beim Bewegen der Stellvorrichtung aus einer ersten Endanschlagstellung in eine zweite Endanschlagstellung zunächst der Motor entgegen der Federkraft arbeitet, bis ein Kipppunkt erreicht wird, von dem aus die Federkraft in die gleiche Drehrichtung wirkt, wie der Antrieb des Gleichstrommotors. Optional kann zur Winkellagebestimmung ein Stellungssensor vorgesehen werden, mit dessen Hilfe die jeweilige Stellung der Abtriebswelle beziehungsweise der zu verstellenden Komponente bestimmt werden kann.

Zur vereinfachten Darstellung ist in der Zeichnung eine Spannungsquelle 1, 2 vorgesehen, welche zur Ansteuerung eines reversiblen Gleichstrommotors selbstverständlich umschaltbar ausgeführt sein muss, was in der vorliegenden Zeichnung nicht dargestellt ist. Die Spannungsquelle 1, 2 ist mit dem Gleichstrommotor 3 verbunden, so dass dieser durch den entstehenden Stromfluss durch seine nicht dargestellte Wicklung in bekannter Weise in Drehung versetzt wird.

Erfindungsgemäß ist nun parallel zum Gleichstrommotor 3 eine erste Zenerdiode 4 sowie eine zweite Zenerdiode 5 angeordnet. Es sollte deutlich sein, dass lediglich eine dieser Zenerdioden 4, 5 notwendig ist, falls der Gleichstrommotor 3 lediglich in eine seiner Drehrichtungen elektronisch abgebremst werden soll und lediglich in diese Richtung federbelastet ausgeführt ist.

Ebenfalls parallel zum Gleichstrommotor 3 ist eine Kurzschlussschaltung 6 angeordnet, welche lediglich der Einfachheit halber durch einen Schalter dargestellt ist. Des Weiteren ist ein weiterer Schalter 7 zwischen Spannungsquelle 1, 2 und Gleichstrommotor 3 dargestellt, welcher ebenfalls lediglich schematisch zu verstehen ist und verdeutlichen soll, dass der Gleichstrommotor 3 von der Spannungsquelle 1, 2 trennbar beziehungsweise zuschaltbar ist.

Im einzelnen läuft das Verfahren so ab, dass beim Fahren von einer ersten Endstellung zur einer zweiten Endstellung zunächst der Gleichstrommotor 3 mit der Spannungsquelle 1, 2 verbunden ist und in der entsprechenden Richtung entgegen der Federkraft beginnt zu drehen. Zu diesem Zeitpunkt ist der Schalter 7 geschlossen, der Schalter 6 geöffnet und die Zenerdioden 4 und 5 sperren, so dass der vollständige Stromfluss über die Wicklung des Gleichstrommotors 3 erfolgt. Nach Überschreiten des Kipppunktes des bistabilen Federelementes wird der Motor nun zusätzlich durch die Federkraft in Richtung zum zweiten Endanschlag beschleunigt. So lange diese Schaltung besteht, wird der Gleichstrommotor 3 bei Überschreiten seiner Leerlaufdrehzahl als Generator wirken und geringfügig schneller laufen als es der Leerlaufdrehzahl des Motors 3 entspricht. In diesem Zustand liefert der Gleichstrommotor 3 als Generator Strom ins Netz zurück, wodurch eine Bremswirkung eintritt. Die Drehzahl ist jedoch durch die beschleunigende Wirkung der Feder immer größer als die Leerlaufdrehzahl des Motors 3.

Im nächsten Schritt wird jedoch der Schalter 7 geöffnet, so dass der Gleichstrommotor 3 von der Netzspannung getrennt ist. Es entsteht insbesondere durch die beschleunigende Federkraft eine hohe induzierte Spannung U_{ind} in entgegengesetzter Richtung entsprechend der Gegen-EMK. Durch Überschreiten einer Sperrspannung U_{Sp} der Zenerdiode 4 sowie der Durchgangsspannung U_{D} der Zenerdiode 5 durch die im Gleichstrommotor 3 induzierte Spannung U_{ind} wird der Gleichstrommotor über den Parallelzweig 8 kurzgeschlossen. In diesem Zustand entspricht diese Schaltung dann einer Parallelschaltung des Gleichstrommotors 3 mit einem Widerstand der lediglich durch die Zenerdiode 5 gebildet wird, da die Zenerdiode 4 vollständig durchschaltet. Hierdurch entsteht eine Widerstandsbremsung des Gleichstrommotors 3, da sich das Vorzeichen des wirkenden Drehmomentes im Vergleich zum Anfahrzeitpunkt ändert.

Die Gegen-EMK des Motors 3 und somit die induzierte Spannung U_{ind} wird nach Durchschalten der Zenerdiode 4 abgebaut, so dass die Zenerdiode 4 wieder sperrt und der Elektromotor 3 wieder frei läuft und durch die Feder beschleunigt wird. Sobald nun wieder die entsprechende induzierte Spannung U_{ind} aufgebaut ist, schaltet erneut die Zenerdiode 4 durch. Es folgt somit ein ständig wechselndes Beschleunigen und Bremsen des Motors 3.

Auf diese Weise wird die Stellvorrichtung sanft in ihre Endlage gefahren. Zur erneuten Ansteuerung der Stellvorrichtung und dem damit einhergehenden Wechsel der Drehrichtung ist der Gleichstrommotor in umgekehrter Richtung zu polen. Der Ablauf bis zum Erreichen des anderen Endanschlags erfolgt im wesentlichen analog zum beschriebenen Vorgang, wobei sich lediglich die Funktion der beiden Zenerdioden umkehrt. Die Zenerdiode 5 dient dann zum Durchschalten und somit kurzschließen des Parallelzweiges 8.

Durch geeignete Wahl der Zenerdioden 4 und 5 ist es nun möglich, die Sperrspannung U_{Sp} so zu verändern, dass die Zeit in der gebremst wird beziehungsweise die Zeit in der beschleunigt wird, für beide Endlagen zu optimieren. Je kleiner die Sperrspannung ist, umso häufiger wird der Motor abgebremst.

Entsprechend ist bei unterschiedlicher Wahl der Sperrspannung U_{Sp} der Zenerdioden 4 und 5 auch eine unterschiedliche Anschlagcharakteristik für beide Endlagen des Gleichstrommotors 3 wählbar.

Soll nun nach einmaligem Abbremsen durch Überschreiten der Sperrspannung U_{Sp} einer der Zenerdioden 4 oder 5 der Gleichstrommotor 3 nicht wieder in den Freilauf geschaltet werden, sondern weiter gebremst werden, so muss der Schalter 6 geschlossen werden, so dass ein ständiger Kurzschluss des Gleichstrommotors 3 verwirklicht wird, der eine fortwährende Abbremsung des Gleichstrommotors in bekannter Weise zur Folge hat. Dies kann beispielsweise über eine entsprechende Logikschaltung durch Erkennung eines Stromflusses im Parallelzweig 8 erkannt werden, wodurch der Schalter 6 geschaltet werden könnte.

Es wird deutlich, dass eine derartige Ansteuerung in eine sonst übliche Ansteuerung eines Gleichstrommotors integriert werden kann, wobei erfindungsgemäß lediglich die Verwirklichung einer möglichen Abtrennung von der Spannungsquelle gegeben sein muss sowie die Parallelschaltung der Zenerdiode zu einem Gleichstrommotor gegeben sein muss.

Die beschriebenen Ausführungen zeigen deutlich, dass auf diese Weise bei korrekter Auslegung der verwendeten Zenerdioden sowie des Gleichstrommotors sowie einer korrekten Wahl des Abschaltzeitpunktes des Gleichstrommotors eine sowohl sehr schnell schaltende Stellvorrichtung, als auch eine die zu verstellenden Komponenten beziehungsweise die Getriebeeinheit schonende Stellvorrichtung geschaffen wird, da eine zuverlässige und einstellbare Anschlagdämpfung erreicht wird.

Es sollte deutlich sein, dass beim Steuern einer Stellvorrichtung mit nur einem federbelasteten Anschlag zur Verwirklichung der Erfindung eine entsprechend geschaltete Zenerdiode ausreichend ist.

## Patentansprüche

1. Verfahren zur Anschlagdämpfung einer Stellvorrichtung mit einem Gleichstrommotor, der einen Rotor und einen Stator aufweist und über den eine anzutreibende Komponente federbelastet in zumindest eine Endlage bewegt wird, **dadurch gekennzeichnet, dass** der Gleichstrommotor (3) vor Erreichen der Endlage von der Spannungsquelle (1, 2) getrennt wird, so dass durch die Bewegung des Rotors aufgrund der Federbelastung eine Spannung U_{ind} in der Wicklung des Stators induziert wird, bis eine Sperrspannung U_{Sp} einer parallel zum Gleichstrommotor (3) geschalteten Zenerdiode (4) durch die induzierte Spannung U_{ind} überschritten wird, so dass der Gleichstrommotor (3) über die Zenerdiode (4) kurzgeschlossen wird, bis die Sperrspannung U_{Sp} der Zenerdiode (4) durch die sich abbauende induzierte Spannung U_{ind} unterschritten wird.

2. Verfahren zur Anschlagdämpfung nach Anspruch 1, **dadurch gekennzeichnet, dass** nach Überschreiten der Sperrspannung U_{Sp} der Zenerdiode (4) der Gleichstrommotor (3) bis zum Erreichen des mechanischen Anschlags über eine Kurzschlussschaltung (6) kurz geschlossen wird.

3. Verfahren zur Anschlagdämpfung nach Anspruch 1 oder 2 für eine Stellvorrichtung (2) mit zwei federbelastet anzusteuernden Endlagen, **dadurch gekennzeichnet, dass** eine zweite Zenerdiode (5) in Reihe und entgegen zur ersten Zenerdiode (4) parallel zum Gleichstrommotor (3) geschaltet wird, wobei bei Überschreiten der Sperrspannung U_{Sp} der Zenerdiode (4, 5) plus der Durchgangsspannung U_{D} der zweiten Zenerdiode (5, 4) durch die induzierte Spannung U_{ind} der Gleichstrommotor (3) über die Zenerdioden (4, 5) beim Anfahren beider Endlagen kurzgeschlossen wird, bis die Sperrspannung U_{Sp} der Zenerdiode (4, 5) plus der Durchgangsspannung U_{D} der zweiten Zenerdiode (5, 4) wieder unterschritten wird oder die Kurzschlussschaltung (6) betätigt wird.

4. Stellvorrichtung für eine Verbrennungskraftmaschine mit
einem Gleichstrommotor,
einer Antriebswelle welche vom Gleichstrommotor antreibbar ist,
einer Getriebeeinheit, welche mit der Antriebswelle und einer Abtriebswelle zur untersetzten Übertragung der Bewegung der Antriebswelle auf die Abtriebswelle gekoppelt ist,
zu verstellenden Komponenten, welche die Abtriebswelle in Bewegung versetzt und
einem Federelement, welches ein schwenkbares Teil der Stellvorrichtung oder der zu verstellenden Komponenten in Richtung zumindest einer durch einen mechanischen Anschlag definierten Endlage belastet,
**dadurch gekennzeichnet, dass**
die Stellvorrichtung eine Ansteuereinheit aufweist, in welcher parallel zum Gleichstrommotor (3) eine Zenerdiode (4) angeordnet ist.

5. Stellvorrichtung nach Anspruch 4, **dadurch gekennzeichnet, dass** die Ansteuereinheit eine Kurzschlussschaltung (6) aufweist.

6. Stellvorrichtung nach Anspruch 4 oder 5, **dadurch gekennzeichnet, dass** die Stellvorrichtung zwei definierte Endlagen aufweist, in welche die Komponenten durch ein bistabiles Federelement belastet fahrbar sind, wobei parallel zum Gleichstrommotor (3) zwei Zenerdioden (4, 5) gegeneinander geschaltet angeordnet sind.
